(19) Europäisches Patentamt / European Patent Office / Office européen des brevets

(11) **EP 1 975 523 B1**

(12) **EUROPEAN PATENT SPECIFICATION**

(45) Date of publication and mention
of the grant of the patent:
**16.05.2012 Bulletin 2012/20**

(51) Int Cl.:
***B01D 53/06*** *(2006.01)*      ***B01D 53/26*** *(2006.01)*
***F24F 3/14*** *(2006.01)*

(21) Application number: **08102730.2**

(22) Date of filing: **18.03.2008**

(54) **Dehumidifier and dehumidification method**

Entfeuchter und Entfeuchtungsverfahren

Déshumidificateur et procédé de déshumidification

(84) Designated Contracting States:
**DE FR GB IT NO SE**

(30) Priority: **30.03.2007 JP 2007093796**

(43) Date of publication of application:
**01.10.2008 Bulletin 2008/40**

(73) Proprietor: **Nichias Corporation
Tokyo 105-8555 (JP)**

(72) Inventors:
• **Yamazaki, Teruji
Minato-ku
Tokyo 105-8555 (JP)**
• **Okabe, Toshihisa
Minato-ku
Tokyo 105-8555 (JP)**

• **Aoyama, Kei
Minato-ku
Tokyo 105-8555 (JP)**

(74) Representative: **Fiesser, Gerold Michael et al
Herzog Fiesser & Partner
Patentanwälte
Isartorplatz 1
80331 München (DE)**

(56) References cited:
EP-A- 1 275 431      DE-A1- 3 247 528
JP-A- 6 031 131      JP-A- 6 063 345
JP-A- 10 272 334     JP-A- 11 057 384
JP-A- 2002 326 012   US-A1- 2004 000 152

**Description**

BACKGROUND OF THE INVENTION

Field of the Invention

The present invention relates to a rotary regenerative-type dehumidifier and a dehumidification method for continuously dehumidifying unprocessed air by dehumidifying unprocessed air with a dehumidification agent and, at the same time, regenerating the dehumidification agent which has adsorbed moisture.

Description of Related Art

In general, a desiccant-type dehumidifier comprising a disk-type regenerative dehumidification rotor having a dehumidification agent carried thereon has been used. Such a dehumidification rotor is divided into a dehumidification zone and a regeneration zone. Wet air in a room is caused to pass through the dehumidification zone, wherein the moisture in the air is adsorbed in the dehumidification agent to dehumidify the air. At the same time, heated air is fed to the regeneration zone to heat the dehumidification agent and removes water from the dehumidification agent.

For example, Japanese Patent Application Laid-open No. 2000-126498 (Patent Document 1) discloses a dehumidifier comprising an adsorbent which adsorbs moisture in indoor air and is heated to be dehumidified and regenerated on a regeneration side, a heat exchanger to exchange the heat of the circulation air heated and humidified on the regeneration side and the heat of the indoor air, a heating means to heat the adsorbent on the regeneration side, a first blower fan to feed the indoor air to the adsorbent on the adsorbing side, and a second blower fan to circulate the air. The dehumidifier is equipped with a pipe to dry the indoor air supplied by the first blower fan by causing the air to pass through the adsorbent on the adsorption side and a circulation pipe which causes the circulation air from the second blower fan to flow through the heating means and the adsorbent on the regeneration side, thereby exchanging the heat of the high temperature high humidity air with the indoor air in the heat exchanger. The adsorbent on the adsorption side is replaced with the adsorbent on the regeneration side. Moisture generated during regeneration is cooled by the indoor air by the heat exchanger and collected as dew condensation.

In accordance with the energy saving requirement in recent years, reduction of electric power consumption by the desiccant dehumidifier is desired and various dehumidifiers have been developed. For example, Japanese Patent Application Laid-open No. 2002-326012 (Patent Document 2) proposes a method of increasing the dehumidification efficiency by conditioning the state of the dehumidification agent to dehumidify more easily. According to the method, the air exhausted from the regeneration zone is sent to a heat exchanger and the air passing through the heat exchanger is sent to at least a part of the dehumidification zone, whereby the dehumidification agent before dehumidification is cooled. Japanese Patent Application Laid-open No. 2003-38930 (Patent Document 3) proposes a method of increasing the dehumidification efficiency by preventing leakage of radiant heat from a heater by providing a shield plate between the heater and the outer frame to cover the front of the heater.

(Patent Document 1) Japanese Patent Application Laid-open No. 2000-126498 (Claims)
(Patent Document 2) Japanese Patent Application Laid-open No. 2002-326012 (Claims)
(Patent Document 3) Japanese Patent Application Laid-open No. 2003-38930 (Claims)

Further prior art dehumidifiers are e.g. known from US 2004/000 152 A1, DE 3 247 528 A1, and JP 06 031 131 A.

In particular, US 2004/0000152 A1 discloses an apparatus for dehumidifying air including a partition separating the interior of the housing into a supply portion and a regeneration portion wherein an active desiccant wheel is positioned such that a portion of the wheel extends into the supply portion and a portion of the wheel extends into the regeneration portion, so that the wheel can rotate through the supply air stream and the regeneration air stream to dehumidify the supply air stream. A heater warms the regeneration air stream as necessary to regenerate the desiccant wheel. The desiccant wheel comprises desiccant material such as silica gels, activated alumina or zeolites. The speed of the desiccant wheel varies from a minimum of about 1/8 to about 1/2 rotations per minute (rpm) to as high as about 8 rpm.

SUMMARY OF THE INVENTION

Since the heater for heating the dehumidification agent consumes the largest amount of electric power in the desiccant-type dehumidifier, reducing the power consumption of the heater is most effective in order to save overall power consumption.

However, in known dehumidifiers, the dehumidification agent cannot be fully regenerated if the electric power consumption of the heater is excessively reduced, resulting in an insufficient amount of dehumidification. Thus, there has been a limit in the reduction of the power consumption of the heater in the improvement proposed by the Patent Document 2 or Patent Document 3.

Accordingly, an object of the present invention is to provide a dehumidifier and a dehumidification method which can significantly reduce the electric power consumption of a heater.

As a result of extensive research in order to achieve the above object, the inventors of the present invention have found that (1) radiant heat of an electric heater can be more effectively used if the rotor is operated to rotate once in a specific period of time, which is longer than the time required for a common dehumidifier to rotate once; (2) for this reason, the dehumidification agent in a regeneration zone can be sufficiently regenerated and the amount of dehumidification can be increased at a low electric power consumption; (3) the effect can be further improved by providing a dehumidification zone, a regeneration zone, and a purge zone with a specific size; and (4) the electric power consumption of a heater can be reduced by these means. These findings have led to the completion of the present invention.

Specifically, the present invention (1) provides a dehumidifier comprising: a dehumidification rotor composed of an inorganic fibrous carrier on which an inorganic dehumidification agent is supported and having open cells in the direction of the rotor shaft; a first partition component dividing one rotor surface of the dehumidification rotor into a dehumidification zone, a regeneration zone, and a purge zone; a second partition component dividing the other rotor surface of the dehumidification rotor into a dehumidification zone, a regeneration zone, and a purge zone; a first air supply means to supply unprocessed air to the dehumidification zone; a second air supply means to supply regeneration air to the regeneration zone and supply purge air to the purge zone; an electric heater to heat the regeneration air supplied to the regeneration zone; a passage to discharge a mixed air of air discharged from the regeneration zone and air discharged from the purged zone; a condenser installed in the mixed air discharge passage; and a controllable driving means for rotating the dehumidification rotor, said driving means being adapted to be controlled to rotate the dehumidification rotor once in 150 to 300 seconds.

The present invention (2) provides a dehumidification method comprising: dividing one rotor surface of a dehumidification rotor, which is composed of an inorganic fibrous carrier on which an inorganic dehumidification agent is supported and having open cells in the direction of the rotor shaft, into a dehumidification zone, a regeneration zone, and a purge zone; dividing the other rotor surface of the dehumidification rotor into a dehumidification zone, a regeneration zone, and a purge zone; supplying unprocessed air to the dehumidification zone, regeneration air to the regeneration zone, and purge air to the purge zone, while rotating the dehumidification rotor; heating the regeneration air supplied to the regeneration zone by an electric heater; and controlling the dehumidification rotor to rotate once in 150 to 300 seconds.

According to the present invention, a dehumidifier and a dehumidification method which can significantly reduce the electric power consumption of a heater can be provided.

BRIEF DESCRIPTION OF THE DRAWING

Figure 1 is a schematic diagram showing a dehumidifier rotor 1 installed in a rotor case of the dehumidifier of the present invention.

Figure 2 shows an enlarged view of an area A in an open side 2a of the dehumidification rotor 1 in Figure 1.

Figure 3 is a schematic perspective view showing the arrangement of parts in a casing of the dehumidifier of the present invention.

Figure 4 is a schematic cross-section view showing the arrangement of the parts in the casing of the dehumidifier of the present invention.

Figure 5 is a side elevation view of the parts shown in Figures 3 and 4 from a rotor surface 2b side.

Figure 6 shows a first partition component 10 viewed from the side opposite to the rotor surface 2a.

Figure 7 shows the dehumidification rotor 1 viewed from the side of the rotor surface 2a.

Figure 8 is a schematic diagram of a punching metal.

Figure 9 shows a duct 12 on the regeneration air discharge side viewed from the side opposite to the rotor surface 2b.

DETAILED DESCRIPTION OF THE INVENTION AND

PREFERRED EMBODIMENTS

The dehumidifier of the present invention has a dehumidification rotor composed of an inorganic fibrous carrier on which an inorganic dehumidification agent is supported and having open cells in the direction of the rotor shaft, a first partition component dividing one rotor surface of the dehumidification rotor into a dehumidification zone, a regeneration zone, and a purge zone; a second partition component dividing the other rotor surface of the dehumidification rotor into a dehumidification zone, a regeneration zone, and a purge zone; a first air supply means to supply unprocessed air to the dehumidification zone; a second air supply means to supply regeneration air to the regeneration zone and supply purge air to the purge zone; an electric heater to heat the regeneration air supplied to the regeneration zone; a passage to discharge a mixed air of air discharged from the regeneration zone and air discharged from the purge zone; a condenser installed in the mixed air discharge passage; and a driving means for rotating the dehumidification rotor, while controlling the dehumidification rotor to rotate once in 150 to 300 seconds.

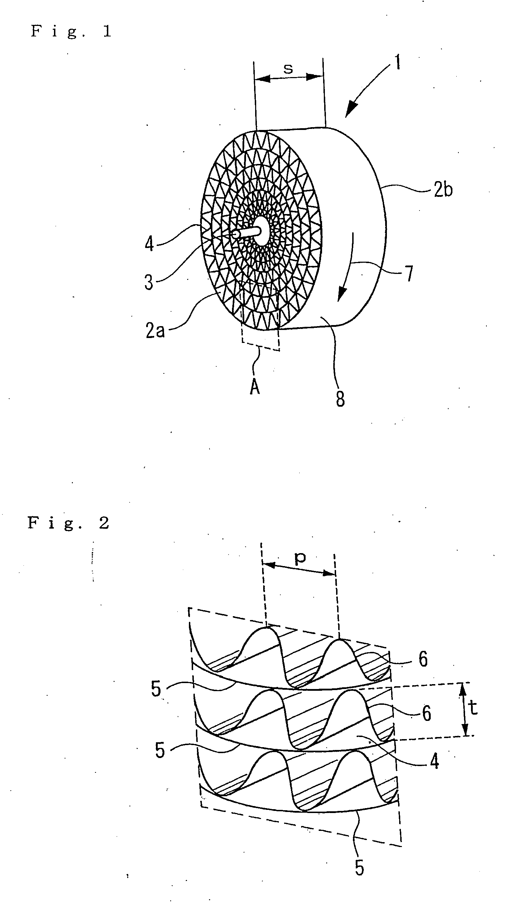

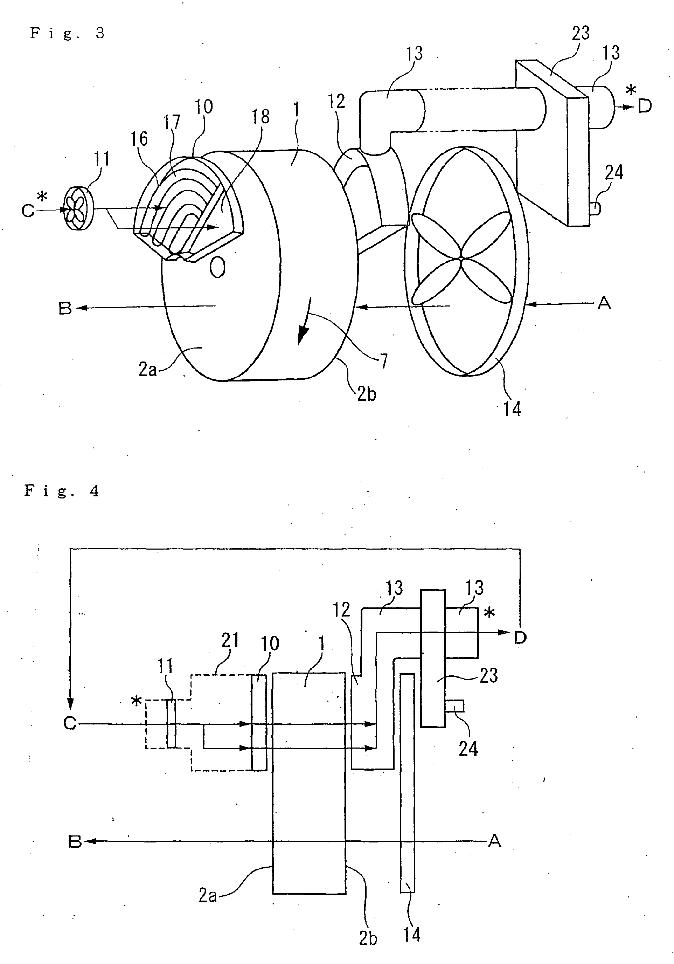

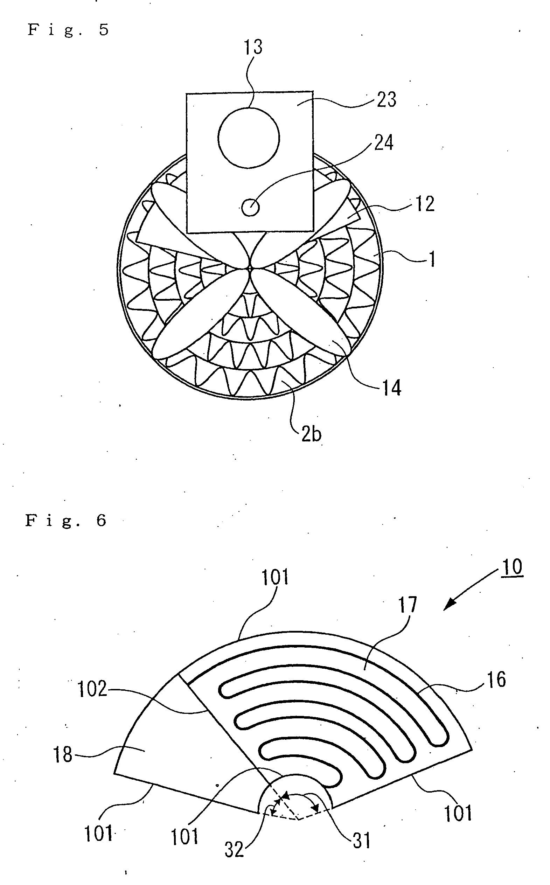

The dehumidifier of the present invention will be explained with reference to Figures 1 to 5. Figure 1 is a schematic diagram showing a dehumidification rotor 1 installed in a casing of the dehumidifier of the present invention; Figure 2 shows an enlarged view of an area A in a rotor surface 2a of the dehumidification rotor 1 in Figure 1; Figure 3 is a schematic perspective view showing the arrangement of parts in the casing of the dehumidifier of the present invention; Figure 4 is a schematic cross-sectional view showing the arrangement of the parts in the casing of the dehumidifier of the present invention; and Figure 5 is a side elevation view of the parts shown in Figures 3 and 4 from a rotor surface 2b. The dehumidifier shown in Figures 1 to 5 is one embodiment of the dehumidifier of the present invention. The dehumidifier of the present invention is not limited to the embodiment shown in these drawings.

As shown in Figure 1, a dehumidification rotor 1 is formed with open cells 4 therein parallel to a rotor shaft 3. The open cells 4 allow unprocessed air, regeneration air, and purge air to flow therethrough. The dehumidification rotor 1 has rotor surfaces 2a and 2b on either end. The rotor surfaces 2a and 2b are entrances for the unprocessed air, regeneration air, and purge air. The rotor shaft 3 is attached to the center of the dehumidification rotor 1 and functions as a rotor shaft to rotate the dehumidification rotor 1 in a revolving direction 7. As shown in Figure 2, the open cells 4 are formed from flat parts 5 and corrugated parts 6 which are alternately laminated. The dehumidification rotor 1 is composed of an inorganic fibrous carrier 8 in the shape of the dehumidification rotor 1 on which an inorganic dehumidification agent is supported.

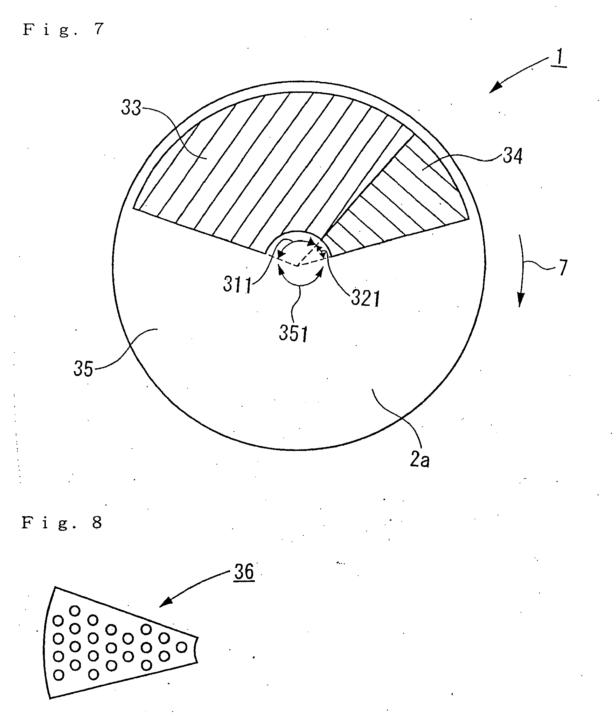

As shown in Figures 3 to 5, the dehumidification rotor 1 is rotatably secured via the rotor shaft 3 in the casing. A first partition component 10 is installed on one rotor surface 2a of the dehumidification rotor 1 and a second fan 11 is installed on the outside of the first partition component 10. A regeneration air discharge side duct 12 is provided on the other rotor surface 2b of the dehumidification rotor 1, and a first fan 14 is installed on the outside of the regeneration air discharge side duct 12. The rotor shaft 3 is omitted in Figures 3 and 4. In addition, Figure 3 shows an external configuration of the dehumidification rotor 1 with the open cells being omitted (the same applies to Figure 7).

The casing has a regeneration air supply side duct 21 secured therein as shown in Figure 4. The first partition component 10 and the second fan 11 are installed in the regeneration air supply side duct 21. A mixed air circulation passage 13 is installed between the regeneration air supply side duct 21 and the regeneration air discharge side duct 12 for circulating a mixed air D discharged from the rotor surface 2b for cyclically using as a regeneration/purge air C. The mixed air circulation passage 13 is equipped with a condenser 23 which has a drain pipe 24. To simplify the drawing, only a part of the mixed air circulation passage 13 is shown in Figure 3. Note that the mixed air circulation passage 13 is connected between the two asterisks (*) in the Figure 3. The regeneration air discharge side duct 12 is not provided with an internal partition which separates the regeneration zone from the purge zone. For convenience of description, the regeneration air supply side duct 21 is shown by dotted lines.

The inside of the first partition component 10 is divided into a regeneration air supply side 17 and a purge air supply side 18. An electric heater 16 is installed on the regeneration air supply side 17.

When viewed from the rotor surface 2b as shown in Figure 5, the unprocessed air is supplied to the part of the rotor surface 2b which does not overlap with the regeneration air discharge side duct 12.

The dehumidifier of the present invention has the components shown in Figures 1 to 5 installed in the casing.

The dehumidification rotor 1 is further equipped with a driving means (not shown) which rotates the dehumidification rotor 1. The driving means is controlled so as to rotate the dehumidification rotor 1 once in 150 to 300 seconds, preferably 160 to 280 seconds, and particularly preferably 170 to 250 seconds.

The dehumidification method of the present invention is carried out using the dehumidifier of the present invention. Specifically, the dehumidification method of the present invention comprises dividing one rotor surface of a dehumidification rotor, which is composed of an inorganic fibrous carrier on which an inorganic dehumidification agent is supported and having open cells in the direction of the rotor shaft, into a dehumidification zone, a regeneration zone, and a purge zone; dividing the other end of the dehumidification rotor into a dehumidification zone, a regeneration zone, and a purge zone; supplying unprocessed air to the dehumidification zone, regeneration air to the regeneration zone, and purge air to the purge zone, while rotating the dehumidification rotor; heating the regeneration air supplied to the regeneration zone by an electric heater; and controlling the dehumidification rotor to rotate once in 150 to 300 seconds.

Next, a method of operating the dehumidifier provided with components shown in Figures 1 to 5, that is, the dehumidification method of the present invention will be described. As shown in Figures 3 and 4, the unprocessed air A is supplied to the dehumidification zone of the dehumidification rotor 1 from the rotor surface 2b by the first fan 14 and passes through the inside of the dehumidification rotor 1. In this instance, moisture in the unprocessed air A is adsorbed by the inorganic dehumidification agent, whereby the unprocessed air A becomes dry air B. The dry air B going out of the dehumidification rotor 1 from the rotor surface 2a is discharged from the dehumidifier. The unprocessed air A is dehumidified in this manner. The inorganic dehumidification agent which has absorbed moisture is sent to the regeneration zone by rotation of the dehumidification rotor 1.

The second fan 11 supplies the regeneration/purge air C to the regeneration air supply side 17 of the first partition component 10, and causes the regeneration/purge air C to pass through the electric heater 16. The regeneration/ purge air C passing through the electric heater 16 is heated by the electric heater 16 and becomes regeneration air. The regeneration air is supplied to the regeneration zone from the rotor surface 2a and passes through the dehumidification rotor 1. Since moisture in the inorganic dehumidification agent moves to the regeneration air in this instance, the inorganic dehumidification agent is dehumidified and regenerated. The regeneration air which has received moisture, i.e., the discharge air from the regeneration zone, goes out of the dehumidification rotor 1 from the rotor surface 2b. The regenerated inorganic dehumidification agent is moved to the purge zone by rotation of the dehumidification rotor 1.

The regeneration/purge air C is supplied also to the purge air supply side 18 of the first partition component 10 by the second fan 11. The regeneration/purge air C then passes through the purge air supply side 18. The regeneration/ purge air C passing through the purge air supply side 18 is supplied to the purge zone from the rotor surface 2a as purge air and passes through the inside of the dehumidification rotor 1. Since the heat of the inorganic dehumidification agent heated in the regeneration zone moves to the purge air in this instance, the dehumidification agent is cooled. The purge air which has received the heat, i.e., the discharge air from the purge zone, goes out of the dehumidification rotor 1 from the rotor surface 2b. The cooled inorganic dehumidification agent is moved to the dehumidification zone by rotation of the dehumidification rotor 1 and is used again to dehumidify the unprocessed air A.

The regeneration zone discharge air and the purge zone discharge air are mixed when discharged from the rotor surface 2b and become a mixed air D. That is, the regeneration zone discharge air and the purge zone discharge air are mixed in a regeneration air discharge side duct 12 and become the mixed air D. Then, the mixed air D is transferred from the regeneration air discharge side duct 12 to a mixed air circulation passage 13, wherein the moisture in the mixed air D is collected by a condenser 23 installed in the mixed air circulation passage 13. The mixed air D from which the moisture has been collected is transferred to a regeneration air supply side duct 21 via the mixed air circulation passage 13.

According to the dehumidifier and the dehumidification method of the present invention, dehumidification of the unprocessed air A and regeneration of the inorganic dehumidification agent are continuously carried out by supplying the unprocessed air A to the dehumidification zone, the regeneration air to the regeneration zone, and the purge air to the purge zone, while rotating the dehumidification rotor 1 in the revolving direction 7 to circulate the inorganic dehumidification agent through the dehumidification zone, regeneration zone, and purge zone.

The dehumidification rotor 1 is composed of an inorganic fibrous carrier 8 and an inorganic dehumidification agent supported on the inorganic fibrous carrier 8. As shown in Figure 2, the dehumidification rotor 1 has a honeycomb structure. The inorganic fibrous carrier with a honeycomb structure is prepared by laminating a porous flat fibrous carrier and a corrugated fibrous carrier which is obtained by corrugating the flat fibrous carrier by bonding the flat fibrous carrier with the corrugated fibrous carrier at the top of the curve of the corrugated fibrous carrier using an inorganic adhesive. Nearly semicircular pillar-shaped holes formed between the flat fibrous carrier and the corrugated fibrous carrier function as air passages. The flat fibrous carrier and the corrugated fibrous carriers are laminated so that hollow spaces are formed parallel to the rotor shaft 3. As an example of the lamination method, a method of layering a pair formed of the flat fibrous carrier and the corrugated fibrous carrier and reeling the layered pairs around a reel can be given. Although any dehumidification rotor with a structure having open cells running parallel to the rotor shaft may be used in the dehumidifier of the present invention, the dehumidification rotor is preferably in the shape of a honeycomb structure as in the dehumidification rotor 1.

The inorganic fibrous carrier is a woven or nonwoven fabric made from inorganic fiber. Examples of the fiber include, but are not particularly limited to, glass fibers such as E glass fiber, NCR glass fiber, AGR fiber, ECG fiber, S glass fiber, and A glass fiber, chopped strands of these glass fibers, and inorganic fibers such as ceramic fiber, alumina fiber, mullite fiber, silica fiber, rock wool fiber, and carbon fiber.

A biologically soluble inorganic fiber can be given as a fiber used for forming the inorganic fibrous carrier. The biologically soluble inorganic fiber refers to an inorganic fiber of which the solubility in a physiological saline solution at 40°C is 1% or more. More specifically, inorganic fibers described in Japanese Patent Applications Laid-open No. 2000-220037, No. 2002-68777, No. 2003-73926, and No. 2003-212596, such as an inorganic fiber containing 85 mass% or more of $SiO_2$ and CaO in total, 0.5 to 3.0 mass% of MgO, 2.0 to 8.0 mass% of $P_2O_5$, and having a carcinogenic index (KI value) according to German Regulations for Hazardous Materials of 40 or more; an inorganic fiber containing $SiO_2$, MgO, and $TiO_2$ as essential components; an inorganic fiber containing $SiO_2$, MgO, and manganese oxides as essential components; an inorganic fiber containing 52 to 72 mass% of $SiO_2$, less than 3 mass% of $Al_2O_3$, 0 to 7 mass% of MgO, 7.5 to 9.5 mass% of CaO, 0 to 12 mass% of $B_2O_3$, 0 to 4 mass% of BaO, 0 to 3.5 mass% of SrO, 10 to 20.5 mass% of $Na_2O$, 0.5 to 4.0 mass% of $K_2O$, and 0 to 5 mass% of $P_2O_5$; and an inorganic fiber containing 75 to 80 mass% of $SiO_2$, 1.0 to 3.0 mass% of $Al_2O_3$, 16 to 20 mass% of MgO, 0.3 to 5.0 mass% of CaO, 0 to 2.0 mass% of $K_2O$ and/or $Fe_2O_3$ can be given. These biologically soluble inorganic fibers may be used either individually or in combination of two or more.

A method for determining the solubility in the physiological saline solution is now described. 1 g of a sample of inorganic fiber pulverized into 200 mesh or less and 150 ml of a physiological saline solution are put into an Erlenmeyer flask (300 ml). The flask is put into an incubator at 40°C. The flask is horizontally shaken by rotation at 120 rpm for 50 hours. After shaking, the mixture is filtered and the filtrate is analyzed by ICP spectrophotometry to determine the concentration (mg/1) of silicon, magnesium, calcium, and aluminum. The solubility in physiological saline solution (%) is determined from the concentration of each element in the filtrate and the content (mass%) of each element in the inorganic fiber before dissolution using the following formula. In the following formula, $c_1$, $c_2$, $c_3$, and $c_4$ respectively indicate the concentration (mg/1) of silicon, magnesium, calcium, and aluminum determined by ICP spectrophotometry analysis and $d_1$, $d_2$, $d_3$, and $d_4$ respectively indicate the content (mass%) of silicon, magnesium, calcium, and aluminum of the inorganic fiber before dissolution.

$$\text{Solubility in physiological saline solution (\%)} = \{\text{amount of filtrate (l)} \times (c_1+c_2+c_3+c_4) \times 100\}/\{\text{amount of inorganic fiber before dissolution (mg)} \times (d_1+d_2+d_3+d_4)/100\}$$

The inorganic fibrous carrier is a porous material having a number of pores between the fibers of the inorganic fibrous carrier. The fiber void ratio of the inorganic fibrous carrier is usually 80 to 95%, and the thickness of the inorganic fibrous carrier is usually 0.1 to 1 mm. The fiber void ratio refers to the ratio of the portion obtained by subtracting the volume occupied by fibers in the inorganic fibrous carrier from the apparent volume of the fibrous carrier to the apparent volume of the inorganic fibrous carrier.

The pitch p of the dehumidification rotor is 1.0 to 6.0 mm, and preferably 2.0 to 4.0 mm. The height t is 0.5 to 3.0 mm, and preferably 1.0 to 2.0 mm. The pitch p indicates the distance between the tops of the adjacent curves and the top t indicates the height of the curve in the corrugated wave 6 shown in Figure 2. The thickness s of the dehumidification rotor 1 is 10 to 50 mm, and preferably 15 to 30 mm. The pitch p, height t, and thickness s of dehumidification rotor 1 in the above range ensure a large dehumidification volume by the dehumidifier.

Although the dehumidification rotor is described as being produced by forming a flat fibrous carrier into a honeycomb structure and causing an inorganic dehumidification agent to be supported on the formed structure, in the description of the dehumidification rotor 1, it is possible to first prepare a flat fibrous carrier on which the inorganic dehumidification agent is supported and then form the flat fibrous carrier into a honeycomb structure.

There are no specific limitations to the inorganic dehumidification agent supported on the dehumidification rotor to the extent that the dehumidification agent is an inorganic material regeneratable by releasing water when caused to come in contact with regeneration air. As examples of such an inorganic dehumidification agent, zeolite such as Y-zeolite, X-zeolite, and A-zeolite; amorphous porous material such as silica gel, alumina gel, and silica-alumina gel; and the like can be given.

The first partition component 10 divides the rotor surface 2a into a dehumidification zone, a regeneration zone, and a purge zone. The first partition component 10 and each zone on the rotor surface 2a side will be described with reference to Figure 6 and Figure 7. Figure 6 shows the first partition component 10 viewed from the side opposite to the rotor surface 2a, and Figure 7 shows the dehumidification rotor 1 viewed from the rotor surface 2a side. As shown in Figure 6, the first partition component 10 is formed from a contour wall 101 and an internal partition wall 102 which divide the inside of the first partition component 10 into the regeneration air supply side 17 and the purge air supply side 18. The contour wall 101 divides the rotor surface 2a into dehumidification zone 35, a regeneration zone 33, and a purge zone 34, wherein a part of the rotor surface 2a opposite to the contour wall 101 forms the regeneration zone 33 and the purge zone 34, and the remaining parts form the dehumidification zone 35. Since the internal partition wall 102 divides the regeneration zone 33 and the purge zone 34 divided by the contour wall 101 into the regeneration zone 33 and the purge zone 34, the part of the rotor surface 2a opposite to the regeneration air supply side 17 forms the regeneration zone 33, and the part of the rotor surface 2a opposite to the purge zone supply side 18 forms the purge zone 34. In Figure 7, the regeneration zone 33 is shown by slash lines from the upper right to the lower left, and the purge zone 34 is shown by slash lines from upper left to lower right.

The shape formed by the contour wall 101 and the internal partition wall 102 on the regeneration air supply side 17 is, in general, nearly a sector with the center missing. As shown in Figure 6, in the first partition component 10 viewed from the side opposite to the rotor surface 2a, the angle 31 formed by the extension of the contour wall 101 and the extension of the internal partition wall 102 on the regeneration air supply side 17 is 15° to 170°, and preferably 30° to 120°. Since the shape of the regeneration air supply side 17 opposing to the rotor surface 2a is equivalent to the shape of the regeneration zone 33 on the rotor surface 2a side in the present invention, the angle 31 is equivalent to the angle 311 formed by extensions of the two sides of the regeneration zone 33 at the point where these extensions intersect as shown in Figure 7. That angle 311 is the center angle of the regeneration zone 33 of the rotor surface 2a side.

The shape formed by the contour wall 101 and the internal partition wall 102 on the purge air supply side 18 is, in general, nearly a sector with the center missing. In the first partition component 10 viewed from the side opposite to the rotor surface 2a, the angle 32 formed by the extension of the contour wall 101 and the extension of the internal partition wall 102 on the purge air supply side 18 is 10° to 90°, and preferably 20° to 60°. Since the shape of the regeneration air supply side 18 opposite to the rotor surface 2a is equivalent to the shape of the purge zone 34 on the rotor surface 2a side in the present invention, the angle 32 is equivalent to the angle 321 formed by extensions of the two sides of the purge zone 34 at the point where these extensions intersects as shown in Figure 7. That angle 321 is the center angle of the purge zone 34 of the rotor surface 2a side.

In Figure 7, the parts other than the regeneration zone 33 and purge zone 34 form the dehumidification zone 35. The center angle 351 of the dehumidification zone 35 is 100° to 335°, and preferably 180° to 270°.

Although the center of the sector having the center angle of the regeneration zone 33 and the center of the sector having the center angle of the purge zone 34 of the first partition component 10 are the same in Figure 6, in the dehumidifier of the present invention, the center of the sector having the center angle of the regeneration zone, the center of the sector having the center angle of the purge zone, and the center of the rotor surface 2a may be the center of different circles.

The ratio of the angle 31 to the angle 32 (angle 31/angle 32) is 1 to 6, preferably 1.5 to 5.5, and particularly preferably 2 to 5.

The center angle of the regeneration zone is 15° to 170°, and preferably 30° to 120°, the center angle of the purge zone is 10° to 90°, and preferably 20° to 60°, and the ratio of the angle of the regeneration zone to the angle of the purge zone (angle of regeneration zone/angle of purge zone) is 1 to 6, preferably 1.5 to 5.5, and particularly preferably 2 to 5. The center angle of the regeneration zone, the center angle of the purge zone, and the ratio of the angle of the regeneration zone to the angle of the purge zone in the above range ensure a large dehumidification volume by the dehumidifier.

The ratio of the area of the regeneration zone 33 to the area of the rotor surface 2a (regeneration zone 33/rotor surface 2a) is 0.04 to 0.50, and preferably 0.08 to 0.35; the ratio of the area of the purge zone 34 to the area of the rotor surface 2a (purge zone 34/rotor surface 2a) is 0.02 to 0.25, and preferably 0.05 to 0.17; and the ratio of the area of the dehumidification zone 35 to the area of the rotor surface 2a (dehumidification zone 35/rotor surface 2a) is 0.28 to 0.93, and preferably 0.5 to 0.75. The ratio of the area of the regeneration zone 33 to the area of the purge zone 34 (regeneration zone 33/purge zone 34) is 1 to 6, and pref erably 1.5 to 5.5, and particularly preferably 2 to 5. The ratio of the area of the regeneration zone 33 to the area of the rotor surface 2a, the ratio of the area of the purge zone 34 to the area of the rotor surface 2a, and the ratio of the area of the regeneration zone 33 to the area of the purge zone 34 in the above range ensure a large dehumidification volume by the dehumidifier.

The first partition component 10 may be provided with a metal plate with small holes therethrough, which is generally called a punched metal 36, on the purge air supply side 18 as shown in Figure 8. The punched metal 36 is attached in order to adjust the amount of the regeneration air supplied to the regeneration zone and the amount of the purge air supplied to the purge zone according to the size and the number of small holes in the punched metal 36.

The electric heater 16 attached to the regeneration air supply side 17 is a component which heats the regeneration/purge air C. The electric heater 16 heats the regeneration/purge air C while heating the dehumidification rotor and the inorganic dehumidification agent in the regeneration zone with radiant heat. The regeneration/purge air C passing through the electric heater 16 is supplied to the regeneration zone as regeneration air.

The electric heater 16 is an electric heater in which the output (watt density) is controlled at 0.025 to 0.4 W/h/mm$^2$, and preferably 0.03 to 0.1 W/h/mm$^2$. The output (watt density) of the electric heater 16 controlled in the above range ensures a large dehumidification amount at a low electric consumption of the dehumidifier. The watt density in the present invention refers to the electric power (W) per one mm$^2$ of the regeneration zone on the rotor surface 2a side per one hour. Therefore, in the dehumidification method of the present invention, the watt density of the electric heater is controlled at 0.025 to 0.4 W/h/mm$^2$, and preferably 0.03 to 0.1 W/h/mm$^2$.

The watt density of the heat discharged from the electric heater 16 can be controlled either by a control section of a computer or by selecting the material, length, or thickness and the like of the electric heater 16.

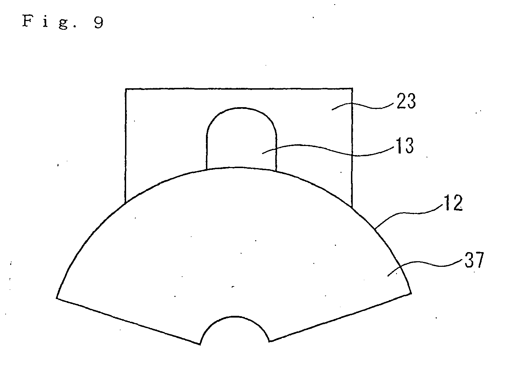

Figure 9 shows a regeneration air discharge side duct 12 viewed from the side opposite to the rotor surface 2b. Although the opening 37 of the regeneration air discharge side duct 12 is installed opposite to the rotor surface 2b side, the regeneration air discharge side duct 12 is not provided with an internal partition wall which separates the regeneration zone from the purge zone. In other words, the rotor surface 2b is divided into a dehumidification zone, a regeneration zone, and a purge zone by the regeneration air discharge side duct 12, but the regeneration zone and the purge zone are not separated. For this reason, the regeneration zone discharge air and the purge zone discharge air are mixed when discharged from the rotor surface 2b and become a mixed air. The mixed air is then again transferred to the inlet port side of the regeneration air supply side duct 12, after passing through the regeneration air discharge side duct 12 and the mixed air circulation passage 13. Therefore, the regeneration air discharge side duct 12 is the second partition component and the mixed air circulation passage 13 is a discharge passage of the regeneration zone discharge air and the purge zone discharge air.

Since the regeneration air discharge side duct 12 is installed between the dehumidification rotor 1 and the first fan 14, the regeneration air discharge side duct 12 functions as a bulkhead which prevents the unprocessed air A from being sent to the regeneration zone or the purge zone. Therefore, in the dehumidifier of the present invention, the area of the rotor surface 2b not overlapping with the regeneration air discharge side duct 12 serves as the dehumidification zone.

The mixed air circulation passage 13 is equipped with a condenser 23 to collect the moisture in the mixed air by condensation.

The first fan is the first air supply means for supplying the unprocessed air A to the dehumidification zone. As examples of the first air supply means, a fan, an axial flow fan, a turbofan, a sirocco fan, and the like can be given.

The second fan is the second air supply means to supply regeneration air to the regeneration zone and supply purge air to the purge zone. As examples of the second air supply means, a fan, an axial flow fan, a turbofan, a sirocco fan, and the like can be given. In the dehumidifier of the present invention shown in Figure 1 to Figure 5, the second air supply means functions as a means to supply both the regeneration air to the regeneration zone and the purging air to the purge zone. The second air supply means in the dehumidifier of the present invention may also have a means to supply the regeneration air to the regeneration zone and a means to supply the purging air to the purge zone separately.

The dehumidification rotor 1 of the present invention is equipped with a driving means (not shown) which rotates the dehumidification rotor 1. The driving means is controlled so as to rotate the dehumidification rotor 1 once in 150 to 300 seconds, preferably 160 to 280 seconds, and particularly preferably 170 to 250 seconds. Since the radiant heat from the electric heater 16 can be fully used if the time required for the dehumidification rotor 1 to rotate once is controlled in the above range, the inorganic dehumidification agent can be sufficiently regenerated at a small electric consumption of the electric heater 16. For this reason, the amount of dehumidification can be increased by using the dehumidifier of the present invention. Accordingly, the time for rotating the dehumidification rotor 1 once in the dehumidification method of the present invention is in the range of 150 to 300 seconds, preferably 160 to 280 seconds, and particularly preferably 170 to 250 seconds.

In the dehumidifier of the present invention shown in Figure 1 to Figure 5, the outlet port side of the regeneration air discharge side duct 12 and the inlet port side of the regeneration air supply side duct 21 are connected by the mixed air circulation passage 13 and the mixed air D is cyclically used as the regeneration/purge air C. The dehumidification method of the present invention, however, includes an embodiment in which the air is supplied to the regeneration zone and the purge zone from outside of the dehumidifier by providing an air pipe for introducing the air from outside of the dehumidifier.

Although the rotor surface 2b side is not divided into the regeneration zone and the purge zone by the second partition component in the dehumidifier shown in Figure 1 to Figure 5, the dehumidifier and the dehumidification method of the present invention include all the embodiments in which the regeneration zone discharge air and the purge zone discharge air are mixed. Specifically, although the embodiment has a component side between the regeneration zone and the purge zone partitioning the regeneration zone and the purge zone on the rotor surface 2b and mixing the discharge air from the regeneration zone and the discharge air from the purge zone after passing through the rotor surface 2b, the regeneration zone and the purge zone are not divided substantially. Such an embodiment is included in the dehumidifier of the present invention.

The present invention will be described in more detail by examples, which should not be construed as limiting the present invention.

EXAMPLES

(Examples 1 to 2 and Comparative Examples 1 to 3)

(Preparation of dehumidification rotor)

A carrier having a corrugated honeycomb structure with a pitch of 3.3 mm and a curve height of 1.6 mm, made from silica-alumina fiber paper (thickness: 0.2 mm) ("Honeycle" manufactured by Nichias Corp.) was cut into a cylinder with a diameter of 200 mm and a thickness of 20 mm to obtain an inorganic fibrous carrier a.

90 parts by mass of Y zeolite (silica-alumina ratio: 5), 45 parts by mass of silica sol (solid component: 20 mass %), and 200 parts by mass of water was mixed to obtain a slurry b. The inorganic fibrous carrier a was dipped in the slurry b, dried, and fired at 500°C to obtain a dehumidification rotor c. The amount of the Y zeolite supported on the dehumidification rotor c was 120 g/l.

(Fabrication of dehumidifier)

A dehumidifier having the components shown in Figures 1 to 5 installed in a casing was fabricated. The dehumidification rotor c prepared above was used as the dehumidification rotor 1 in the drawings. The detailed specifications are shown in Table 1.

TABLE 1

| | Example | | Comparative Example | | |
|---|---|---|---|---|---|
| | 1 | 2 | 1 | 2 | 3 |
| Angle of regeneration zone (deg) | 110 | 85 | 110 | 80 | 55 |
| Angle of purge zone (deg) | 30 | 30 | 30 | 10 | 5 |
| Angle of dehumidification zone (deg) | 220 | 245 | 220 | 270 | 300 |
| Area ratio<br>Regeneration zone/rotor surface 2a<br>Purge zone/rotor surface 2a<br>Dehumidification zone/rotor surface 2a<br>Regeneration zone/purge zone | 0.306<br>0.0833<br>0.611<br>3.67 | 0.236<br>0.0833<br>0.681<br>2.83 | 0.306<br>0.0833<br>0.611<br>3.67 | 0.222<br>0.0277<br>0.75<br>8 | 0.153<br>0.0139<br>0.833<br>11 |
| Time required for dehumidification rotor to rotate once (sec) | 200 | 170 | 100 | 140 | 110 |
| Output of electric heater (W) | 360 | 360 | 360 | 450 | 360 |
| Watt density of electric heater (W/h/mm$^2$) | 0.038 | 0.049 | 0.038 | 0.065 | 0.076 |

(Evaluation of dehumidifier)

The dehumidification rotor was removed from the dehumidifier and allowed to stand under conditions of 25°C and 50% RH to cause the dehumidification agent to adsorb moisture until saturated. Then, the dehumidification rotor was installed in the dehumidifier. Next, the dehumidifier was operated under the operating conditions shown in Table 2 at 25°C and 50% RH for one hour. One hour after the start of the experiment, the difference of the absolute humidity of the mixed air D immediately after discharge from the rotor surface 2b and the absolute humidity of the air immediately before passing through the electric heater 16 were measured. The absolute humidity of the mixed air D immediately after discharge from the rotor surface 2b refers to the absolute humidity of the mixed air D, which is recycled by the mixed air circulation passage 13, before being introduced to the condenser 23, and the absolute humidity of the air immediately before passing through the electric heater 16 refers to the absolute humidity of the mixed air D after passing through the condenser 23.

TABLE 2

| | Example | | Comparative Example | | |
|---|---|---|---|---|---|
| | 1 | 2 | 1 | 2 | 3 |
| Unprocessed air A | 25°C, 50%RH | | | | |
| Air immediately before passing through electric heater | 45°C, 100%RH | | | | |
| Amount of regeneration air (m$^3$/min) | 0.062 | 0.062 | 0.062 | 0.062 | 0.062 |
| Speed of regeneration air (m/s) | 0.15 | 0.20 | 0.15 5 | 0.20 | 0.30 |
| Amount of unprocessed air (m$^3$/min) | 0.62 | 0.62 | 0.62 | 0.62 | 0.62 |
| Speed of unprocessed air (m/s) | 0.75 | 0.67 | 0.75 | 0.61 | 0.55 |
| Amount of purge air (m$^3$/min) | 0.0017 | 0.023 | 0.0017 | 0.008 | 0.0057 |
| Speed of purge air (m/s) | 0.15 | 0.20 | 0.15 | 0.20 | 0.30 |

(continued)

| | Example | | Comparative Example | | |
|---|---|---|---|---|---|
| | 1 | 2 | 1 | 2 | 3 |
| Absolute humidity difference (g/kg)* | 60 | 55 | 47 | 60 | 40 |
| *Absolute humidity difference = absolute humidity of mixed air D immediately after discharge from rotor surface 2b - absolute humidity of air immediately before passing through electric heater | | | | | |

**Claims**

1. A dehumidifier comprising: a dehumidification rotor (1) composed of an inorganic fibrous carrier (8) on which an inorganic dehumidification agent is supported and having open cells (4) in the direction of the rotor shaft (3); a first partition component (10) dividing one rotor surface (2a) of the dehumidification rotor (1) into a dehumidification zone (35); a regeneration zone (33), and a purge zone (34); a second partition component dividing the other rotor surface (2b) of the dehumidification rotor (1) into a dehumidification zone, a regeneration zone, and a purge zone; a first air supply means (14) to supply an unprocessed air (A) to the dehumidification zone; a second air supply means (11,21) to supply regeneration air (C) to the regeneration zone and supply a purge air (C) to the purge zone; an electric heater (16) to heat the regeneration air supplied to the regeneration zone; a discharge passage of a mixture of air (D) discharged from the regeneration zone and air discharged from the purge zone; a condenser (23) installed in the mixed air discharge passage (13); and a controllable driving means for rotating the dehumidification rotor, said driving means being adapted to be controlled to rotate the dehumidification rotor once in 150 to 300 seconds.

2. The dehumidifier according to claim 1, wherein the center angle (31,311) of the regeneration zone (33) is 15° to 170°, the center angle (32, 321) of the purge zone (34) is 10° to 90°, and the ratio of the angle (31,311) of the regeneration zone to the angle (32,321) of the purge zone is 1 to 6.

3. The dehumidifier according to claim 1 or 2, wherein the ratio of the area of the regeneration zone (33) to the area of the rotor surface (2a) of the dehumidification rotor (1) is 0.04 to 0.50, the ratio of the area of the purge zone (34) to the area of the rotor surface (2a) of the dehumidification rotor (1) is 0.02 to 0.25, and the ratio of the area of the regeneration zone (33) to the area of the purge zone (34) is 1 to 6.

4. The dehumidifier according to any one of claims 1 to 3, wherein the electric heater (16) is an electric heater in which the output (watt density) is controlled at 0.025 to 0.4 $W/h/mm^2$.

5. A dehumidification method comprising: dividing one rotor surface (2a) of a dehumidification rotor (1) which is composed on an inorganic fibrous carrier (8) on which an inorganic dehumidification agent is supported and having open cells (4) in the direction of the rotor shaft (7), into a dehumidification zone, a regeneration zone, and a purge zone; dividing the other rotor surface (2b) of the dehumidification rotor (1) into a dehumidification zone, a regeneration zone, and a purge zone; supplying unprocessed air to the dehumidification zone, regeneration air to the regeneration zone, and purge air to the purge zone, while rotating the dehumidification rotor (1); heating the regeneration air supplied to the regeneration zone by an electric heater (16); and controlling the dehumidification rotor (1) to rotate once in 150 to 300 seconds.

6. The dehumidification method according to claim 5, wherein the center angle (31,311) of the regeneration zone (33) is 15° to 170°, the center angle (32, 311) of the purge zone (34) is 10° to 90°, and the ratio of the angle (31,311) of the regeneration zone (33) to the angle (32,321) of the purge zone (34) is 1 to 6.

7. The dehumidification method according to claim 5 or 6, wherein the ratio of the area of the regeneration zone (33) to the area of the rotor surface (2a) of the dehumidification rotor (1) is 0.04 to 0.50, the ratio of the area of the purge zone (34) to the area of the rotor surface (2a) of the dehumidification rotor (1) is 0.02 to 0.25, and the ratio of the area of the regeneration zone (33) to the area of the purge zone (34) is 1 to 6.

8. The dehumidification method according to any one of claims 5 to 7, wherein the output (watt density) of the electric heater (16) is controlled at 0.025 to 0.4 $W/h/mm^2$.

**Patentansprüche**

1. Entfeuchter, der Folgendes umfasst: einen Entfeuchtungsrotor (1), der aus einem Träger (8) aus anorganischen Fasern gebildet ist, auf dem ein anorganisches Entfeuchtungsmittel getragen wird und der in Richtung der Rotorwelle (3) offene Zellen (4) besitzt, eine erste Trennwandkomponente (10), die eine Rotoroberfläche (2a) des Entfeuchtungsrotors (1) in eine Entfeuchtungszone (35), eine Regenerationszone (33) und eine Abführzone (34) unterteilt; eine zweite Trennwandkomponente, die die andere Rotoroberfläche (2b) des Entfeuchtungsrotors (1) in eine Entfeuchtungszone, eine Regenerationszone und eine Abführzone unterteilt; ein erstes Luftzufuhrmittel (14), um der Entfeuchtungszone unbehandelte Luft (A) zuzuführen; ein zweites Luftzufuhrmittel (11, 21), um der Regenerationszone Regenerationsluft (C) zuzuführen und um der Abführzone Abführluft (C) zuzuführen; eine elektrische Heizeinrichtung (16), um die der Regenerationszone zugeführte Regenerationsluft zu erwärmen; einen Ausstoßdurchlass für ein Gemisch aus Luft (D), die aus der Regenerationszone ausgestoßen wird, und aus Luft, die aus der Abführzone ausgestoßen wird; einen Kondensator (23), der in dem Ausstoßdurchlass (13) für gemischte Luft installiert ist; und ein steuerbares Antriebsmittel, um den Entfeuchtungsrotor zu drehen, wobei das Antriebsmittel dazu ausgelegt ist, so gesteuert zu werden, dass es den Entfeuchtungsrotor einmal in 150 bis 300 Sekunden dreht.

2. Entfeuchter nach Anspruch 1, wobei der Zentrumswinkel (31, 311) der Regenerationszone (33) 15° bis 170° beträgt, der Zentrumswinkel (32, 321) der Abführzone (34) 10° bis 90° beträgt und das Verhältnis des Winkels (31, 311) der Regenerationszone zu dem Winkel (32, 321) der Abführzone im Bereich von 1 bis 6 liegt.

3. Entfeuchter nach Anspruch 1 oder 2, wobei das Verhältnis der Fläche der Regenerationszone (33) zu der Fläche der Rotoroberfläche (2a) des Entfeuchtungsrotors (1) im Bereich von 0,04 bis 0,50 liegt, das Verhältnis der Fläche der Abführzone (34) zu der Fläche der Rotoroberfläche (2a) des Entfeuchtungsrotors (1) im Bereich von 0,02 bis 0,25 liegt und das Verhältnis der Fläche der Regenerationszone (33) zu der Fläche der Abführzone (34) im Bereich von 1 bis 6 liegt.

4. Entfeuchter nach einem der Ansprüche 1 bis 3, wobei die elektrische Heizeinrichtung (16) eine elektrische Heizeinrichtung ist, in der der Ausgang (Watt-Dichte) auf 0,025 bis 0,4 $W/mm^2$ gesteuert wird.

5. Entfeuchtungsverfahren, das Folgendes umfasst: Unterteilen einer Rotoroberfläche (2a) eines Entfeuchtungsrotors (1), der aus einem Träger (8) aus anorganischen Fasern gebildet ist, von dem ein anorganisches Entfeuchtungsmittel getragen wird und der in Richtung der Rotorwelle (7) offene Zellen (4) besitzt, in eine Entfeuchtungszone, eine Regenerationszone und eine Abführzone; Unterteilen der anderen Rotoroberfläche (2b) des Entfeuchtungsrotors (1) in eine Entfeuchtungszone, eine Regenerationszone und eine Abführzone; Zuführen von unbehandelter Luft zu der Entfeuchtungszone, von Regenerationsluft zu der Regenerationszone und von Abführluft zu der Abführzone, während der Entfeuchtungsrotor (1) gedreht wird; Erwärmen der Regenerationsluft, die der Regenerationszone zugeführt wird, durch eine elektrische Heizeinrichtung (16); und Steuern des Entfeuchtungsrotors (1), damit er sich einmal in 150 bis 300 Sekunden dreht.

6. Entfeuchtungsverfahren nach Anspruch 5, wobei der Zentrumswinkel (31, 311) der Regenerationszone (33) im Bereich von 15° bis 170° liegt, der Zentrumswinkel (32, 321) der Abführzone (34) im Bereich von 10° bis 90° liegt und das Verhältnis des Winkels (31, 311) der Regenerationszone (33) zu dem Winkel (32, 321) der Abführzone (34) im Bereich von 1 bis 6 liegt.

7. Entfeuchtungsverfahren nach Anspruch 5 oder 6, wobei das Verhältnis der Fläche der Regenerationszone (33) zu der Fläche der Rotoroberfläche (2a) des Entfeuchtungsrotors (1) im Bereich von 0,04 bis 0,50 liegt, das Verhältnis der Fläche der Abführzone (34) zu der Fläche der Rotoroberfläche (2a) des Entfeuchtungsrotors (1) im Bereich von 0,02 bis 0,25 liegt und das Verhältnis der Fläche der Regenerationszone (33) zu der Fläche der Abführzone (34) im Bereich von 1 bis 6 liegt.

8. Entfeuchtungsverfahren nach einem der Ansprüche 5 bis 7, wobei der Ausgang (Watt-Dichte) der elektrischen Heizeinrichtung (16) auf 0,025 bis 0,4 $W/mm^2$ gesteuert wird.

**Revendications**

1. Déshumidificateur comportant : un rotor (1) de déshumidification composé d'un support fibreux inorganique (8) sur lequel est porté un agent inorganique de déshumidification et qui est doté de cellules ouvertes (4) dans la direction de l'arbre (3) du rotor ; un premier composant (10) de séparation divisant une surface (2a) de rotor du rotor (1) de déshumidification en une zone (35) de déshumidification, une zone (33) de régénération et une zone (34) de purge ; un deuxième composant de séparation divisant l'autre surface (2b) de rotor du rotor (1) de déshumidification en une zone de déshumidification, une zone de régénération et une zone de purge ; un premier moyen (14) d'alimentation en air destiné à fournir de l'air non traité (A) à la zone de déshumidification ; un deuxième moyen (11, 21) destiné à fournir de l'air (C) de régénération à la zone de régénération et à fournir de l'air (C) de purge à la zone de purge ; un élément chauffant électrique (16) destiné à chauffer l'air de régénération fourni à la zone de régénération ; un passage d'évacuation d'un mélange d'air (D) évacué en provenance de la zone de régénération et d'air évacué en provenance de la zone de purge ; un condenseur (23) installé sur le passage (13) d'évacuation d'air mixte ; et un moyen d'entraînement susceptible d'être commandé pour faire tourner le rotor de déshumidification, ledit moyen d'entraînement étant prévu pour être commandé de façon à faire tourner le rotor de déshumidification une fois en 150 à 300 secondes.

2.  Déshumidificateur selon la revendication 1, l'angle au centre (31, 311) de la zone (33) de régénération étant de 15° à 170°, l'angle au centre (32, 321) de la zone (34) de purge étant de 10° à 90° et le rapport de l'angle au centre (31, 311) de la zone de régénération à l'angle au centre (32, 321) de la zone de purge étant de 1 à 6.

3.  Déshumidificateur selon la revendication 1 ou 2, le rapport de l'aire de la zone (33) de régénération à l'aire de la surface (2a) de rotor du rotor (1) de déshumidification étant de 0,04 à 0,50, le rapport de l'aire de la zone (34) de purge à l'aire de la surface (2a) de rotor du rotor (1) de déshumidification étant de 0,02 à 0,25 et le rapport de l'aire de la zone (33) de régénération à l'aire de la zone (34) de purge étant de 1 à 6.

4.  Déshumidificateur selon l'une quelconque des revendications 1 à 3, l'élément chauffant électrique (16) étant un élément chauffant électrique dont l'émission (densité de puissance) est régulée pour valoir 0,025 à 0,4 W/mm$^2$.

5.  Procédé de déshumidification comportant les étapes consistant à : diviser une surface (2a) de rotor d'un rotor (1) de déshumidification composé d'un support fibreux inorganique (8) sur lequel est porté un agent inorganique de déshumidification et qui est doté de cellules ouvertes (4) dans la direction de l'arbre (7) du rotor en une zone de déshumidification, une zone de régénération et une zone de purge ; diviser l'autre surface (2b) de rotor du rotor (1) de déshumidification en une zone de déshumidification, une zone de régénération et une zone de purge ; fournir de l'air non traité à la zone de déshumidification, de l'air de régénération à la zone de régénération et de l'air de purge à la zone de purge, tout en faisant tourner le rotor (1) de déshumidification ; chauffer l'air de régénération fourni à la zone de régénération au moyen d'un élément chauffant électrique (16) ; et commander le rotor (1) de déshumidification de façon à le faire tourner une fois en 150 à 300 secondes.

6.  Procédé de déshumidification selon la revendication 5, l'angle au centre (31, 311) de la zone (33) de régénération étant de 15° à 170°, l'angle au centre (32, 321) de la zone (34) de purge étant de 10° à 90° et le rapport de l'angle au centre (31, 311) de la zone de régénération (33) à l'angle au centre (32, 321) de la zone de purge étant de 1 à 6.

7.  Procédé de déshumidification selon la revendication 5 ou 6, le rapport de l'aire de la zone (33) de régénération à l'aire de la surface (2a) de rotor du rotor (1) de déshumidification étant de 0,04 à 0,50, le rapport de l'aire de la zone (34) de purge à l'aire de la surface (2a) de rotor du rotor (1) de déshumidification étant de 0,02 à 0,25 et le rapport de l'aire de la zone (33) de régénération à l'aire de la zone (34) de purge étant de 1 à 6.

8.  Procédé de déshumidification selon l'une quelconque des revendications 5 à 7, l'émission (densité de puissance) de l'élément chauffant électrique (16) étant régulée pour valoir 0,025 à 0,4 W/mm$^2$.

Fig. 1

Fig. 2

Fig. 3

Fig. 4

F i g . 5

F i g . 6

F i g . 7

F i g . 8

Fig. 9

REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2000126498 A
- JP 2002326012 A
- JP 2003038930 A
- US 2004000152 A1
- DE 3247528 A1
- JP 06031131 A
- US 20040000152 A1
- JP 2000220037 A
- JP 2002068777 A
- JP 2003073926 A
- JP 2003212596 A